# EUROPEAN PATENT SPECIFICATION

(11) **EP 1 625 179 B1**
(45) Date of publication and mention of the grant of the patent: **22.04.2009**
(21) Application number: 04753286.6
(22) Date of filing: 21.05.2004
(51) Int. Cl.: C08L 77/00, B60K 15/03

(54) **ARTICLES MADE FROM POLYAMIDE RESIN COMPOSITIONS AND HAVING IMPROVED FLUID PERMEATION BARRIER PROPERTIES**
GEGENSTÄNDE AUS POLYAMIDHARZZUSAMMENSETZUNGEN MIT VERBESSERTEN FLUIDPERMEATIONSBARRIEREEIGENSCHAFTEN
ARTICLES ELABORES A PARTIR DE COMPOSITIONS DE RESINE DE POLYAMIDE ET POSSEDANT DES PROPRIETES AMELIOREES DE BARRIERE DE PERMEANCE AUX FLUIDES

(30) Priority: 21.05.2003 US 472184 P
(43) Date of publication of application: 15.02.2006
(73) Proprietor: E.I. DU PONT DE NEMOURS AND COMPANY, Wilmington, DE 19898 (US)
(72) Inventor: CHENG, Paul, P., Washington, WV 26181 (US); SAGA, Yuji, Utsunomiya-shi, Tochigi 321-3231 (JP)
(74) Representative: Morf, Jan Stefan
(86) International application number: PCT/US2004/016430
(87) International publication number: WO 2004/104102

(56) References cited:
- US-A- 5 443 867
- US-A- 5 492 980
- US-A1- 2002 128 373
- US-A1- 2002 147 272

## Description

### FIELD OF THE INVENTION

The present invention relates to articles made from certain polyamide resin molding compositions characterized by excellent improved barrier to fluid permeation. More particularly, this invention relates to articles of manufacture suitable for the transport and storage of fuels, and made from such polyamide molding compositions.

### BACKGROUND OF THE INVENTION

Polyamide resins are characterized by excellent mechanical characteristics, moldability, and chemical resistance and have therefore been used in automotive parts, electric/electronic components, mechanical components, and many other applications. Articles made from such polyamide resins possess extremely desirable physical properties. However, in certain applications, it would be desirable to possess improved barrier properties to fluid permeation over those that have been previously available from conventional polyamide molding compositions.

Additives have been used in polyamide resin compositions to obtain improved fluid permeation barrier properties. For example, Japanese Kokai 2002-284991 discloses the uses of a blend of polyphenylensulfide with polyamide to improve fluid permeation barrier properties.

Japanese Kokai 04-140589 discloses a composition that comprises aromatic polyamides and other polymers that are not miscible with the aromatic polyamides. This composition has improved fluid permeation barrier properties.

Neither of these references discloses the particular compositions of and used in the present invention or the unexpected superior fluid permeation barrier property that characterizes the particular compositions of the present invention.

Based on the foregoing discussion, an object of the present invention is to provide articles made from polyamide resin compositions that possess excellent fluid permeation barrier properties, which has not been suggested or recognized in prior art articles formed from the conventional polyamide resin composition. A further object of the present invention is to provide shaped structures and parts for use in applications that require contact with automotive and other engine fuels, including fluid receptacles and tubing, and hosing for applications that require an improved resistance to permeability and other fuel system components. These and other objects, features and advantages of the present invention will become better understood upon having reference to the following description of the invention.

### SUMMARY OF THE INVENTION

The present invention, which allows the stated objective to be attained, concerns molded articles suitable for the transport or storage of fuels used in internal combustion engines and having improved fluid permeation barrier properties, made from polyamide resin compositions consisting of:
(a) 100 weight parts of a polyamide,
(b) 5 to 50 weight parts of a phenolic novolac resin,
5 to 40 weight percent, based on the total weight of the composition, of a specific impact modifier as defined in claim 1, and optionally additives as recited in claim 1.

Referred applications involve the transport and storage of hydrocarbon-based fuels for use in internal combustion engines such as those found in automobiles, trucks, recreational vehicles, farm equipment, lawn maintenance equipment, and heavy machinery.

### DETAILED DESCRIPTION OF THE INVENTION

### Polyamide

The polyamide used in the present invention may be a homopolymer, copolymer, terpolymer, or higher polymer. It may also be a blend of two or more polyamides. Examples of suitable aliphatic polyamides are polyamides 6, 66, 46, 610, 69, 612, 10,10, 11, 12. Aromatic polyamides derived from such monomers as terephthalic acid and its derivatives and isophthalic acid and its derivatives may also be used. Examples include 6T/66, 6TXT, MXD6, 6T/6I, 9T, and 10T, where "T" refers to polymers derived from terephthalic acid or its derivatives and "MXD" refers to *m*-xylylenediamine. Blends of polyamides with thermoplastic polymers may also be used.

The polyamide may be derived from adipic acid, sebacic acid, azelaic acid, dodecandoic acid, terephthalic acid, isophthalic acid or their derivatives and other aliphatic and aromatic dicarboxylic acids and aliphatic alkylenediamines, aromatic diamines, and/or alicyclic diamines. It may also be derived from lactams or aminoacids.

Examples of aliphatic polyamide copolymers or aliphatic polyamide terpolymers include polyamide 66/6 copolymers, polyamide 66/68 copolymers, polyamide 66/610 copolymers, polyamide 66/612 copolymers, polyamide 66/10 copolymers, polyamide 66/12 copolymers, polyamide 6/68 copolymers, polyamide 6/610 copolymers, polyamide 6/612 copolymers, polyamide 6/10 copolymers, polyamide 6/12 copolymers, polyamide 6/66/610 terpolymers, polyamide 6/66/69 terpolymers, polyamide 6/66/11 terpolymers, polyamide 6/66/12 terpolymers, polyamide 6/610/11 terpolymers, polyamide 6/610/12 terpolymers, and polyamide 6/66/PACM (bis-p-(aminocyclohexyl)methane)terpolymers.

Of these, polyamide 66/6 copolymers, polyamide 6/66/610 terpolymers, polyamide 6/66/612 terpolymers, and mixtures of two or more of these polymers are preferred. Especially preferred are polyamide 66/6 copolymers in which the molar ratio of polyamide 66 units to polyamide 6 units ranges from 98:2 to 2:98; polyamide 6/66/610 terpolymers in which the ratio of the moles of polyamide 6 units and polyamide 66 units combined to the moles of polyamide 610 units is from 98:2 to 25:75, and the molar ratio of polyamide 6 units to polyamide 66 units is from 2:98 to 98:2; and polyamide 6/66/612 terpolymers in which the ratio of the moles of polyamide 6 units and polyamide 66 units combined to the moles of polyamide 612 units is from 98:2 to 25:75, and the molar ratio of polyamide 6 units to polyamide 66 units is from 2:98 to 98:2.

Polyamides 66, 11, 12, 6/10, 6/12, and 10/10 are especially advantageous for use in molding articles for uses in applications that require good barrier properties to the permeation of fluid (both liquid and gaseous) fuel materials as well as good mechanical properties, moldability, and chemical resistance properties. It is preferred that the fuel materials be hydrocarbons or hydrocarbons containing other fuels such as alcohols. The polyamides listed above can be used alone or in combination with one or more other polyamides. A preferred polyamide used in the present invention is a mixture of polyamide 66 with at least one other polyamide homopolymer, polyamide copolymer, or polyamide terpolymer.

### Phenolic novolac resin

The phenolic novolac resin used in the present invention is not restricted in so far as it can be used in a resin for conventional plastic moldings. The amount of phenolic novolac resin used in the present invention is 5 to 50 weight parts, or preferably 10 to 30 weight parts, based on 100 weight parts of the aforementioned polyamide. If less than 5 weight parts are present, a composition having high flowability in the molten state, and improved fluid permeation barrier properties cannot be obtained. If more than 50 weight parts are present, the physical properties will be markedly decreased.

### Impact modifier

The polyamide resin composition of the present invention further comprises an elastomeric impact modifier comprising a modified polymer comprising at least one selected from the group consisting of an elastomer consisting of ethylene-α-olefin, an elastomer consisting of ethylene-propylene-diene; and graft modified materials of the above-mentioned elastomers. Two or more unmodified elastomers or modified elastomers may also be blended. At least one of the above-mentioned unmodified elastomers and at least one of the above-mentioned modified elastomers may also be blended. Preferably, an elastomer consisting essentially of ethylene-propylene-diene modified with carboxylic acid-carboxylic acid anhydride can be used. The elastomer consisting essentially of ethylene-propylene-dienes modified with carboxylic acid anhydride, may be, for example, a mixture of ethylene/propylene/1,4-hexadiene and ethylene/propylene/1,4-hexadiene-g-maleic anhydride; ethylene/propylene/1,4-hexadiene/norbomadiene-g-maleic anhydride fumaric acid; ethylene/1,4-hexadiene/norbomadiene-g-maleic Anhydride monoethyl ester; ethylene/propylene/1,4-hexadiene/norbomadiene-g-fumaric acid; a mixture of ethylene/propylene/1,4-hexadiene and ethylene/monoethyleneester of maleic anhydride; a mixture of ethylene/propylene/1,4-hexadiene and ethylene/maleic acid monobutyl ester; a mixture of ethylenelpropylene/1,4-hexadiene and ethylene/maleic anhydride, etc.

The impact modifier is present, in 5-40 weight percent, based on the total weight of the composition. When the impact modifier is present in an amount of less than 5 weight percent, the articles molded from the composition do not in many instances possess acceptable mechanical properties. For example, they often do not have sufficient impact strength. When the impact modifier is present in an amount of more than 40 weight percent, the result can be undesired changes in properties of the polyamide resin compositions. This is particularly important for technically demanding applications where a balance of properties, including low warpage and greater dimensional stability of the molded articles in the presence of moisture is especially critical.

The polyamide resin compositions of the present invention, may, to the extent that the fuel barrier properties of the composition are not adversely affected, further contain other polymers, inorganic fillers, organic fillers, heat stabilizers, plasticizers, antioxidants, nucleating agents, dyes, pigments, mold-release agents, flame retardants, impact modifiers, and other additives in addition to the components mentioned previously.

The polyamide resin compositions may further optionally contain a conductive additive such as one or more of stainless steel fibers, carbon fibers, nickel-coated carbon fibers, carbon black, and carbon nanotubes. When used, the conductive additive will preferably be present in 1 to 15 weight percent, and preferably 2 to 10 weight percent, based on the total weight of the composition.

The polyamide resins used to make articles of the present invention are melt-blended and can be manufactured by any known manufacturing methods. The component materials may be mixed to homogeneity using a melt-mixer such as a single or twin-screw extruder, blender, kneader, Banbury mixer, etc. to give a resin composition. Or, part of the materials may be mixed in a melt-mixer, and the rest of the materials may then be added and further melt-mixed until homogeneous.

Many parts for fuel-related applications must exhibit low permeability to the fuels used with such parts. The articles of the present invention, which are for use in fuel-related applications and other applications where articles that have good barrier properties, require a low degree of permeability to liquid or gaseous fuels. Such applications include articles suitable for the transport or storage of fuels used in internal combustion engines, such as those used in transportation, automobiles and trucks, recreational vehicles, lawn mowers, farm equipment, etc. Examples of such fuels are gasoline, diesel fuels, and other hydrocarbon-based fuels. The hydrocarbon-based fuel may contain further components, such as alcohols. The alcohols may include methanol and/or ethanol. Examples of articles of the present invention are canisters, carbon canister cases, fuel valves, fuel inlets, fuel necks, fuel lines, and fuel tanks.

The articles of the present invention may be formed by any known means such as injection molding, blow molding, extrusion, or thermoforming.

The invention is illustrated by the following Examples.

### EXAMPLES

### Example 1 and Comparative Example 1

The components were dry blended and then compounded at a temperature of 295° C and a screw speed of 200 rpm using a TEM-35 twin-screw extruder manufactured by Toshiba. Upon exiting the extruder, the molten polymer was quenched in a water bath and pelletized.

Disks (0.16 cm (1/16") thick and 7.62 cm (3") in diameter) were fabricated for measurements of fluid permeation that were conducted at 40 °C, according to SAE Method J2659 "Test Method to Measure Fluid Permeation of Polymeric Materials by Speciation".

The components shown in Table 1 were as follows:
Nylon 66: Polyamide 66 (Zytel® FE1111, manufactured by DuPont)
Novolac resin: A novolac resin prepared from phenol and formaldehyde with a number average molecular weight of about 1060.
Modified-EPDM: EPDM (ethylene/propylene/diene polyolefin) grafted with maleic anhydride.

**TABLE 1**

| | **Example 1** | **Comp. Example 1** |
|---|---|---|
| Nylon 66 (weight %) | 68 | 81 |
| Novolac (weight %) | 10 | 0 |
| Modified-EPDM | 22 | 19 |
| (weight %) | | |

The following table provides the results of the permeation testing.

**TABLE 2**

| The fluid permeation barrier test was conducted by using 10% ethanol in gasoline and determining the rate of weight loss at 40 °C at the saturation point. | |
|---|---|
| | **Fluid permeation rate (g/m² x day)** |
| Example 1 | 0.02 |
| Comparative Example 1 | 0.63 |

The effectiveness of the addition of novolac on fluid permeation barrier properties can be seen from the comparison of the fluid permeation rate of Example 1 with that of Comparative Example 1.

## Claims

1. A molded article suitable for the transport or storage of fuels used in internal combustion engines and having improved fluid permeation barrier properties, made from a polyamide resin composition consisting of
(a) 100 weight parts of a polyamide,
(b) 5 to 50 weight parts of a phenolic novolac resin;
(c) 5 to 40 weight percent, based on the total weight of the composition, of an impact modifier selected from an ethylene/ α-olefin copolymer, an ethylene-propylene-diene elastomer, and a graft-modified ethylene-propylene-diene elastomer, and
(d) optionally one or more additives selected from the group consisting of inorganic fillers, organic fillers, heat stabilizers, plasticizers, antioxidants, nucleating agents, dyes, pigments, mold-release agents, flame retardants and conductive additives.

2. The molded article of claim 1 in the form of a fuel cannister.

3. The molded article of claim 1 in the form of a fuel valve.

4. The molded article of claim 1 in the form of a fuel inlet.

5. The molded article of claim 1 in the form of a fuel neck.

6. The molded article of claim 1 in the form of a fuel tank.

7. The molded article of claim 1 in the form of a fuel line.

8. The molded article of Claim1 comprising 1 to 15 weight percent, based on the total weight of the composition, of one or more conductive additives selected from the group consisting of stainless steel fibers, carbon fibers, nickel-coated carbon fibers, carbon black, and carbon nanotubes.

## Patentansprüche

1. Geformtes Erzeugnis aus einer Polyamidharzzusammensetzung, geeignet für den Transport oder für die Lagerung von Kraftstoff, der in einem Verbrennungsmotor verwendet wird und verbesserte Eigenschaften für das Permeationssperren von Flüssigkeiten aufweist, bestehend aus:
(a) 100 Gewichtanteilen Polyamid,
(b) 5 bis 50 Gewichtsanteilen phenolischem Novolak-Harz,
(c) 5 bis 40 Gew.-%, basierend auf das Gesamtgewicht der Zusammensetzung, eines Schlagzähmodifizierungsmittel, ausgewählt aus einem Ethylen/α-Olefin-Copolymer, einem Ethylen-Propylen-Dien-Elastomer, und einem pfropfmodifizierten Ethylen-Propylen-Dien-Elastomer und
(d) wahlweise einem oder mehreren Zusatzstoffen, ausgewählt aus der Gruppe bestehend aus anorganischen Füllstoffen, organischen Füllstoffen, Wärmestabilisatoren, Weichmachern, Antioxidationsmitteln, Keimbildnern, Farbstoffen, Pigmenten, Formablösemitteln, Flammschutzmitteln und leitfähigen Zusatzstoffen.

2. Geformtes Erzeugnis gemäß Anspruch 1 in Form eines Kraftstoffbehälters.

3. Geformtes Erzeugnis gemäß Anspruch 1 in Form eines Kraftstoffventils.

4. Geformtes Erzeugnis gemäß Anspruch 1 in Form eines Kraftstoffeinlasses.

5. Geformtes Erzeugnis gemäß Anspruch 1 in Form eines Kraftstoffstutzens.

6. Geformtes Erzeugnis gemäß Anspruch 1 in Form eines Kraftstofftankes.

7. Geformtes Erzeugnis gemäß Anspruch 1 in Form einer Kraftstoffleitung.

8. Geformtes Erzeugnis gemäß Anspruch 1, umfassend 1 bis 15 Gew.-%, basierend auf das Gesamtgewicht der Zusammensetzung von einem oder mehreren leitfähigen Zusatzstoffen ausgewählt aus der Gruppe bestehend aus Edelstahlfasern, Kohlenstofffasern, nickelbeschichteten Kohlenstofffasern, Ruß, und Kohlenstoffnanoröhren.

## Revendications

1. Pièce moulée, adaptée pour le transport ou stockage de carburants utilisés dans des moteurs à combustion interne et ayant des propriétés de barrage à la perméabilité de fluide améliorées, fabriquée à partir d'une composition de résine polyamide constituée de :
(a) 100 parties en poids d'un polyamide,
(b) 5 à 50 parties en poids d'une résine phénolique novolaque,
(c) 5 à 40 pour cent en poids, sur la base du poids total de la composition, d'un modificateur d'impact sélectionné à partir d'un copolymère éthylène α-oléfine, un élastomère éthylène-propylène-diène, et un élastomère éthylène-propylène-diène modifié par greffage, et
(d) optionnellement, un ou plusieurs additif(s) sélectionné(s) à partir du groupe se constituant de charges anorganiques, de charges organiques, de stabilisants thermiques, de plastifiants, d'antioxydants, d'agents de nucléation, de colorants, de pigments, d'agents de démoulage, d'ignifugeants et d'additifs conducteurs.

2. Pièce moulée selon la revendication 1 sous la forme d'un bidon de carburant.

3. Pièce moulée selon la revendication 1 sous la forme d'une vanne de carburant.

4. Pièce moulée selon la revendication 1 sous la forme d'une arrivée de carburant.

5. Pièce moulée selon la revendication 1 sous la forme d'un goulot de remplissage de carburant.

6. Pièce moulée selon la revendication 1 sous la forme d'un réservoir de carburant.

7. Pièce moulée selon la revendication 1 sous la forme d'une conduite de carburant.

8. Pièce moulée selon la revendication 1 comprenant 1 à 15 pour cent en poids, sur la base du poids total de la composition, d'un ou plusieurs additif(s) conducteur(s) sélectionné(s) à partir du group constitué de fibres d'acier inoxydable, de fibres de carbone, de fibres de carbone enduites de nickel, de noir de charbon et de nanotubes de carbone.
